# EUROPÄISCHE PATENTSCHRIFT

(11) **EP 3 292 634 B1**
(45) Veröffentlichungstag und Bekanntmachung des Hinweises auf die Patenterteilung: **17.05.2023**
(21) Anmeldenummer: 16719390.3
(22) Anmeldetag: 27.04.2016
(51) Int. Cl.: H04B 1/00, H04B 1/18, H04L 5/00

(54) **HF-SCHALTUNG UND HF-MODUL**
HF CIRCUIT AND HF MODULE
CIRCUIT HF ET MODULE HF

(30) Priorität: 06.05.2015 DE 102015107069
(43) Veröffentlichungstag der Anmeldung: 14.03.2018
(73) Patentinhaber: SnapTrack, Inc., San Diego, CA 92121 (US)
(72) Erfinder: ELLÄ, Juha, 24800 Halikko (FI); SCHMIDHAMMER, Edgar, 83371 Stein an der Traun (DE)
(74) Vertreter: Bardehle Pagenberg Partnerschaft mbB Patentanwälte Rechtsanwälte
(86) Internationale Anmeldenummer: PCT/EP2016/059421
(87) Internationale Veröffentlichungsnummer: WO 2016/177617

(56) Entgegenhaltungen:
- WO-A1-2015/041993
- US-A1- 2014 328 220
- Xinyi Tang: "BROADBAND PHASE SHIFTER DESIGN FOR PHASED ARRAY RADAR SYSTEMS", , 1 January 2011 (2011-01-01), pages 1-199, XP055803065, Retrieved from the Internet: URL:https://core.ac.uk/download/pdf/486363 92.pdf [retrieved on 2021-05-10]

## Beschreibung

Die Erfindung betrifft HF-Schaltungen, die in Frontend-Schaltungen Verwendung finden können, und HF-Module, in denen solche Schaltungen enthalten sind. Solche Schaltungen eignen sich insbesondere zur gleichzeitigen Verwendung von HF-Signalen in verschiedenen Frequenzbändern (Carrier Aggregation).

Aus der Patentschrift US 7,212,789 B2 sind HF-Schaltungen mit einem abstimmbaren Duplexer bekannt. US2014328220 und WO2015041993 offenbaren auch HF-Schaltungen. XP055803065 befasst sich mit dem Entwurf von Breitbandigen Phasenschiebern.

Der anhaltende Trend zu immer kleiner bauenden elektrischen Schaltungen, z. B. für Mobilfunkgeräte, wirkt sich prinzipiell nachteilhaft auf die Signalqualität aus, da aufgrund der kleineren Abstände unerwünschte Wechselwirkungen zwischen verschiedenen Schaltungselementen zunehmen. Dieses Problem wird dadurch verschärft, dass entsprechende elektrische Geräte auch zunehmend mehr Funktionen bereitstellen sollen, wodurch die Zahl der Signalpfade und/oder die Zahl der Schaltungselemente pro Signalpfad wächst. Im Übrigen sollen auch die Datenraten moderner Mobilfunkgeräte ansteigen.

Es besteht deshalb die Aufgabe, HF-Schaltungen anzugeben, die trotz der oben genannten und an sich widersprüchlichen Anforderungen eine ausreichende Signalqualität ermöglichen.

Diese Aufgabe wird durch eine HF-Schaltung gemäß Anspruch 1 gelöst. Abhängige Ansprüche geben vorteilhafte Ausgestaltungen an.

Die HF-Schaltung umfasst einen ersten Sendeport, einen ersten Empfangsport, einen gemeinsamen Port und einen dritten Port. Die Schaltung umfasst ferner einen ersten Duplexer mit einem Sendefilter, das zwischen dem ersten Sendeport und dem gemeinsamen Port verschaltet ist, und einen Empfangsfilter, das zwischen dem ersten Empfangsport und dem gemeinsamen Port verschaltet ist. Die Schaltung umfasst ferner ein drittes Filter, das zwischen dem dritten Port und dem gemeinsamen Port verschaltet ist. Zusätzlich dazu umfasst die Schaltung einen ersten Phasenschieber, der zwischen dem ersten Duplexer und dem gemeinsamen Port der HF-Schaltung verschaltet ist. Parallel dazu umfasst die HF-Schaltung einen zweiten Phasenschieber, der zwischen dem dritten Filter und dem gemeinsamen Port der HF-Schaltung verschaltet ist. Das dritte Filter ist dabei ein Bandpassfilter. Die HF-Schaltung ist dazu vorgesehen, gleichzeitig Sendesignale über das Sendefilter und das dritte Filter oder Empfangssignale über das Empfangsfilter und das dritte Filter zu führen. Ein, zwei, drei oder alle Filter, falls die Schaltung noch weitere Filter in weiteren Signalpfaden umfasst, sind in ihren charakteristischen Frequenzen abstimmbar. Zu den charakteristischen Frequenzen gehören die Mittenfrequenz eines Passbands und seine Bandbreite.

Es wird also eine HF-Schaltung angegeben, die im Wesentlichen drei parallele Signalpfadabschnitte mit jeweils einem Filter umfasst. Die beiden Filter des Duplexers können dabei - ebenso wie das dritte Filter - Bandpassfilter sein.

Die angegebene HF-Schaltung ermöglicht einen gleichzeitigen Betrieb in verschiedenen Frequenzbändern wie er z. B. bei Carrier Aggregation (einer Anhäufung zweier oder mehrerer Frequenzbänder) erfolgt. Dabei ist insbesondere ein Betrieb bei Interband-Rx Carrier Aggregation oder Interband-Tx Carrier Aggregation möglich.

Der gemeinsame Port ist dabei ein Anschluss, über den über eine Antennenzuleitung eine oder mehrere Antennen mit der HF-Schaltung verschaltet sein können. Über einen oder mehrere Sendeports können Sendesignale von einer Transceiver-Schaltung empfangen werden. Über einen oder mehrere Empfangsports können Empfangssignale an eine Transceiver-Schaltung weitergegeben werden.

Auch der dritte Port kann mit einer Transceiver-Schaltung verschaltet sein.

Im Gegensatz zu konventionellen HF-Schaltungen, welche z. B. zwei oder mehr HF-Schalter umfassen, um entsprechende HF-Filter mit entsprechenden Signalpfadabschnitten zu verschalten, ermöglicht die angegebene HF-Schaltung Carrier Aggregation auch bei Frequenzbändern mit relativ geringem Abstand. Während Carrier Aggregation bei kombinierter Übertragung im LB (low-band: ca. 650 bis 1000 MH7) und im MB (mid-band: 1700 - 2200 MHz) oder gleichzeitig im LB und im HB (high-band: Frequenzen im Wesentlichen > 2500 MHz) noch relativ problemlos möglich sind, ermöglicht die angegebene HF-Schaltung auch Carrier Aggregation der Kombinationen LB + LB, MB + MB oder MB + HB. Das heißt, gleichzeitige Übertragungen zweier Frequenzbänder im LB oder im MB oder kombinierte Frequenzbänder, die aus dem MB und aus dem HB ausgewählt sind, sind mit guter Signalqualität möglich.

Die Anzahl an Filtern für den Fall, dass verschiedene LB-LB Bänderpaare bzw. HB-HB Bänderpaare unterstützt sein sollen, ist reduziert, wobei durch die Abstimmbarkeit des einen Filters oder der Filter die Flexibilität zusätzlich erhöht ist.

Insbesondere die Mobilfunkfrequenzbänder 1, 2, 3, 4, 5, 7, 8, 12, 17, 19, 20, 21, 26 oder 28 können für Carrier Aggregation in Frage kommen. Dabei sind die Mobilfunkbänder 5, 8, 12, 17, 19, 20, 26 und 28 dem LB zugeordnet. Die Mobilfunkbänder 1, 2, 3, 4, 21 sind dem MB zugeordnet und das Frequenzband 7 ist dem HB zugeordnet.

Es ist dabei möglich, dass über das Sendefilter des ersten Duplexers Sendesignale geführt werden, während gleichzeitig weitere Sendesignale über das dritte Filter geführt werden. Auch ist es möglich, dass Empfangssignale über das Empfangsfilter des ersten Duplexers geführt werden, während gleichzeitig weitere Empfangssignale eines anderen Frequenzbandes über das dritte Filter, das dann entsprechend als Empfangsfilter ausgestaltet ist, geführt werden. Da ein Duplexer ohnehin eine gleichzeitige Übertragung zweiter HF-Signale in entgegengesetzter Richtung ermöglicht, ist somit eine Übertragung von drei verschiedenen HF-Signalen in zwei verschiedenen Frequenzbändern möglich.

Als Frequenzbänder kommen die einzelnen Frequenzbereiche in Frage, die nach der 3GPP Kooperation als für Tx- bzw. Rx-Betrieb vorgesehene Bereiche zu Mobilfunkfrequenzbändern zusammengefasst sind.

Die eingangs erwähnte Verschlechterung der Signalqualität in üblichen HF-Schaltungen wird dabei dadurch umgangen, dass die Zahl der Schaltungselemente mit steigender Funktionalität nicht zwangsläufig ansteigen muss. Denn ein abstimmbares Filter kann prinzipiell zwei oder mehrere HF-Filter fester charakteristischer Frequenzwerte ersetzen. Dem Trend zu anhaltender Miniaturisierung bei zusätzlicher Funktionalität kann deshalb gefolgt werden. Allerdings sind dabei möglicherweise aufwändiger herzustellende einzelne Schaltungselemente wie abstimmbare induktive oder kapazitive Elemente und zusätzlich dazu Steuerleitungen und Steuerelemente notwendig.

Es ist möglich, dass neben den HF-Filtern oder alternativ zu abstimmbaren HF-Filtern auch zumindest ein Phasenschieber, zwei Phasenschieber oder mehrere Phasenschieber, falls die HF-Schaltung mehrere Phasenschieber umfasst, abstimmbar sind. Ein abstimmbarer Phasenschieber ist dabei eine HF-Schaltung, die die Phase eines HF-Signals z. B. frequenzabhängig verändert und die Frequenzabhängigkeit oder das Maß der Veränderung abstimmbar ist.

Es ist möglich, dass die HF-Schaltung zusätzlich einen zweiten Sendeport, einen zweiten Empfangsport und einen zweiten Duplexer umfasst. Der Duplexer hat wiederum ein Sendefilter und ein Empfangsfilter. Das Sendefilter des zweiten Duplexers ist zwischen dem zweiten Sendeport und dem gemeinsamen Port verschaltet. Das Empfangsfilter des zweiten Duplexers ist zwischen dem zweiten Empfangsport und dem gemeinsamen Port verschaltet.

Zwischen dem zweiten Duplexer und dem gemeinsamen Port kann ein dritter Phasenschieber, der ebenfalls abstimmbar sein kann, verschaltet sein.

Es wird somit eine HF-Schaltung angegeben, die im Wesentlichen über fünf parallel geschaltete Signalpfade verfügt. Zwei der Signalpfade werden durch den ersten Duplexer abgedeckt.

Ein dritter Signalpfadabschnitt wird durch das dritte Filter abgedeckt und zwei Signalpfadabschnitte werden durch den zweiten Duplexer abgedeckt.

Über die beiden Duplexer können Sende- bzw. Empfangssignale gleichzeitig oder nacheinander übertragen werden. Der erste Duplexer kann dabei ein erstes Frequenzband abdecken, während der zweite Duplexer ein zweites Frequenzband abdecken kann. Die entsprechenden Frequenzbänder können aus dem LB, dem MB oder dem HB ausgewählt sein. Über den dritten Port und über das dritte Filter ist gemäß der Carrier Aggregation ein gleichzeitiger Betrieb zusammen mit dem ersten Duplexer oder zusammen mit dem zweiten Duplexer möglich. Entsprechend können die Sende- bzw. Empfangssignalfrequenzen des dritten Ports ebenfalls im LB, im MB oder im HB liegen.

Es ist ferner möglich, dass die HF-Schaltung einen weiteren Port, z. B. einen sechsten Port, und ein als Bandpassfilter ausgestaltetes sechstes Filter umfasst. Das sechste Filter ist zwischen dem sechsten Port und dem gemeinsamen Port verschaltet.

Es wird also eine HF-Schaltung mit vier Ports, die mit zwei Duplexern verschaltet sind, und mit zwei weiteren Ports, die über jeweils ein Filter mit dem gemeinsamen Port verschaltet sind, angegeben.

Über den dritten Port und das dritte Filter kann dabei eine Carrier-Aggregation-Übertragung zusammen mit einem der beiden Duplexer stattfinden. Über den sechsten Port und das sechste Filter kann zeitlich abwechselnd oder gleichzeitig eine weitere Carrier-Aggregation-Übertragung zusammen mit dem jeweils anderen Duplexer erfolgen.

Sowohl über den dritten Port als auch über den sechsten Port können dabei Sende- und/oder Empfangssignale übertragen werden.

Zwischen dem sechsten Filter und dem gemeinsamen Port kann ebenfalls ein Phasenschieber verschaltet sein. Der Phasenschieber kann dabei Impedanzelemente konstanter Impedanz umfassen oder abstimmbar sein und dann Schaltungselemente, z. B. kapazitive Elemente und/oder Impedanzelemente, einstellbarer Impedanz umfassen.

Es ist möglich, dass die HF-Schaltung einen Diplexer mit einem ersten Filter und einem zweiten Filter umfasst. Das erste Filter des Diplexers ist zwischen dem ersten Duplexer und dem dritten Filter einerseits und dem gemeinsamen Port andererseits verschaltet. Das zweite Filter des Diplexers ist mit dem gemeinsamen Port verschaltet. Das erste Filter und das zweite Filter sind ausgewählt aus einem Hochpassfilter und einem Tiefpassfilter. Dabei kann der Diplexer als Frequenzweiche zwischen dem ersten Duplexer und dem dritten Filter einerseits und weiteren Filtern wie z. B. den Filtern eines zweiten Duplexers und eines sechsten Filters andererseits fungieren. Deshalb kann das zweite Filter des Diplexers zwischen dem zweiten Duplexer und dem sechsten Filter einerseits und dem gemeinsamen Port andererseits verschaltet sein.

Mit anderen Worten: Über das erste Filter des Diplexers können der erste Duplexer und das dritte Filter mit dem gemeinsamen Port verschaltet sein. Über das zweite Filter des Diplexers können der zweite Duplexer und das sechste Filter mit dem gemeinsamen Port verschaltet sein.

Das erste Filter des Diplexers kann dabei ein Tiefpassfilter sein, während das zweite Filter des Duplexers ein Hochpassfilter ein kann.

Dann ist es möglich, dass der erste Duplexer im LB oder im MB arbeitet, während der zweite Duplexer und das sechste Filter im MB oder im HB arbeiten.

Je nachdem, wie die Filter des ersten Duplexers oder beider Duplexer einerseits und der oder die Phasenschieber andererseits konkret realisiert sind, kann auf einen Antennen-Tuner verzichtet werden. Ein Antennen-Tuner ist dabei eine Schaltung, die eine ungewollte Veränderung der Antennen-Impedanz kompensiert, wenn z. B. die Antennen-Impedanz durch Objekte, z. B. Hände, Kopf usw., in ihrer Umgebung verändert wird. Dazu geeignete HF-Filter und/oder Phasenschieber werden unten vorgestellt.

Es ist trotzdem möglich, dass die HF-Schaltung einen oder mehrere Antennen-Tuner umfasst. Beispielsweise kann ein Antennen-Tuner zwischen dem Diplexer und dem gemeinsamen Port verschaltet sein. Alternativ dazu ist es möglich, dass ein erster Antennen-Tuner zwischen dem ersten Duplexer und dem dritten Filter einerseits und dem ersten Filter des Diplexers andererseits verschaltet ist. Ein zweiter Antennen-Tuner kann zwischen dem zweiten Duplexer und dem sechsten Filter einerseits und dem zweiten Filter des Diplexers andererseits verschaltet sein.

Der Antennen-Tuner im Fall eines einzigen Antennen-Tuners oder die Antennen-Tuner im Fall mehrerer Antennen-Tuner können dabei gesteuert oder geregelt werden. Dazu kann ein entsprechender Antennen-Tuner eine entsprechend ausgestaltete Teilschaltung zur Bestimmung der Impedanz aufweisen und die Impedanz über schaltbare oder variabel einstellbare Impedanzelemente wie kapazitive Elemente oder induktive Elemente in einem Impedanz-Anpassnetzwerk als weitere Teilschaltung einstellen.

Für den Fall, dass die HF-Schaltung auf einen speziell dafür vorgesehenen dedizierten Antennen-Tuner aufweist und eine Kompensation einer Veränderung der Antennen-Impedanz direkt durch ein HF-Filter vorgenommen wird, können die entsprechenden variablen oder schaltbaren Impedanzelemente innerhalb des HF-Filters durch zugehörige Steuer- oder Regelsignale eingestellt werden. Somit ist ein dedizierter Antennen-Tuner nicht zwingend erforderlich, aber optional möglich.

Analog zur möglichen Option eines Antennen-Tuners ist es auch optional möglich, eine oder mehrere Impedanzanpass-Schaltungen zwischen einem oder mehreren HF-Filtern und den entsprechenden transceiver-seitigen Ports vorzusehen. Denn auch eine Impedanzanpassung eines entsprechenden Signalpfadabschnitts an Eingangs- bzw. Ausgangsimpedanzen z. B. eines Empfangs- bzw. Sendeverstärkers ist durch eine vorteilhaft gewählte Filtertopologie möglich.

Es ist deshalb möglich, dass die HF-Schaltung drei Impedanzanpass-Schaltungen aufweist. Eine erste Impedanzanpass-Schaltung ist zwischen dem ersten Sendeport und dem Sendefilter des ersten Duplexers möglich. Eine zweite Impedanzanpass-Schaltung ist zwischen dem ersten Empfangsport und dem Empfangsfilter des ersten Duplexers möglich. Eine dritte Impedanzanpass-Schaltung ist zwischen dem dritten Port und dem dritten Filter möglich.

Jede der Impedanzanpass-Schaltungen kann dabei einerseits eine Schaltung aus Impedanzelementen konstanter Impedanz oder eine Verschaltung mit abstimmbaren Impedanzelementen umfassen.

Es ist deshalb möglich, dass zumindest eine Impedanzanpass-Schaltung oder alle Impedanzanpass-Schaltungen oder einzelne Impedanzanpass-Schaltungen abstimmbar sind.

Der Integrationsgrad der HF-Schaltung kann weiter gesteigert werden, indem die HF-Schaltung einen Sendeverstärker, einen Empfangsverstärker und einen dritten Verstärker umfasst. Der Sendeverstärker ist dann zwischen dem ersten Sendeport und dem gemeinsamen Port verschaltet. Der Empfangsverstärker ist zwischen dem ersten Empfangsport und dem gemeinsamen Port verschaltet. Der dritte Verstärker ist zwischen dem dritten Port und dem gemeinsamen Port verschaltet.

Dabei befinden sich die HF-Filter bevorzugt zwischen den Verstärkern in ihrem Signalpfadabschnitt und dem gemeinsamen Port.

Es ist möglich, dass zumindest ein Verstärker, mehrere Verstärker oder alle Verstärker abstimmbar sind, d.h. Signale verschiedener Frequenzen verarbeiten werden können. So kann ein abstimmbarer Verstärker z. B. zwei oder drei Verstärker ersetzen, die speziell für ihr Frequenzband, z. B. ausgewählt aus LB, MB oder HB, vorgesehen sind.

Die oben erwähnte vorteilhafte Filtertopologie, die die Existenz eines Antennen-Tuners und/oder einer Impedanzanpass-Schaltung im entsprechenden Signalpfadabschnitt überflüssig machen kann, umfasst serielle kapazitive Elemente im Signalpfadabschnitt, ein dazu parallel geschaltetes induktives Element und Parallelpfade, die den entsprechenden Signalpfad mit Masse verschalten.

Es ist erfindungsgemäß vorgesehen, dass die HF-Schaltung ein Filter umfasst, dessen Filtertopologie ein paralleles induktives Element, drei serielle kapazitive Elemente und vier Parallelpfade aufweist. Jeder der vier Parallelpfade hat dabei eine Parallelschaltung mit einem kapazitiven Element und einem induktiven Element.

Es ist möglich, dass ein solches Filter auch vier oder fünf serielle kapazitive Elemente umfasst. Das vierte serielle kapazitive Element kann dabei eingangsseitig am Signalpfad angeordnet und das fünfte serielle kapazitive Element kann dabei ausgangsseitig am Signalpfad angeordnet sein. Dann sind die drei seriellen kapazitiven Elemente in Serie zwischen dem vierten und dem fünften seriellen kapazitiven Element verschaltet.

Ein erfindungsgemäßer Phasenschieber, der das HF-Filter darin unterstützen kann, Antennen-Tuner und/oder Impedanzanpass-Schaltungen überflüssig zu machen, kann ein serielles kapazitives Element, zwei Parallelpfade mit je einem induktiven Element und ein kapazitives Element, das die beiden Parallelpfade mit Masse verschaltet, umfassen.

Entsprechend ist es möglich, dass die HF-Schaltung zumindest einen solchen Phasenschieber oder mehrere solche Phasenschieber umfasst. Es ist auch möglich, dass alle Phasenschieber der HF-Schaltung eine solche Schaltungstopologie aufweisen.

Damit ein HF-Filter und/oder ein Phasenschieber frequenzmäßig abstimmbar sind und dadurch Antennen-Tuner und/oder Impedanzanpass-Schaltungen überflüssig machen können, ist es bevorzugt, wenn Filter und/oder Phasenschieber abstimmbare Impedanzelemente umfassen. Die abstimmbaren Impedanzelemente können dabei abstimmbare induktive Elemente und insbesondere abstimmbare kapazitive Elemente sein. Es ist nicht nötig, dass alle Impedanzelemente der Filtertopologie oder der Topologie des Phasenschiebers abstimmbar sind. Doch je mehr Impedanzelemente abstimmbar sind, desto größter ist die Zahl der Freiheitsgrade beim Abstimmen. Zwar steigt damit zum einen der Schaltungsaufwand durch eine große Anzahl an Steuerleitungen und zum anderen die Komplexität eines entsprechenden Steuerungs- und/oder Regelungs-Algorithmus. Dennoch ist die gesamte Schaltungskomplexität im Vergleich zu HF-Schaltungen mit einer Vielzahl unterschiedlicher Filter, Tuner, Impedanzanpass-Schaltungen, Diplexer-Filter und HF-Schalter verringert.

Allerdings hat sich im Rahmen der Bemühungen der Erfinder gezeigt, dass die oben genannten Filter- und Phasenschiebertopologien schon eine gute intrinsische Abstimmbarkeit aufweisen und die Gesamtzahl abstimmbarer Schaltungselemente relativ gering sein kann. So ist es möglich, dass lediglich zwei oder drei der kapazitiven Elemente in Parallelpfaden und ein oder zwei kapazitive Elemente im Signalpfadabschnitt ausreichen, um eine gute Abstimmbarkeit in einem großen Frequenzbereich zu ermöglichen.

Es ist möglich, dass eine der oben erläuterten HF-Schaltungen derart in einem HF-Modul zusammengefasst ist, dass alle Schaltungselemente der Schaltung in einem Bauelement zusammengefasst sind.

So ist es möglich, alle HF-Filter in einem einzigen Bauelement zusammenzufassen. Die Integration der Phasenschieber in diesem Bauelement ist ebenfalls möglich. Auch eventuell vorhandene Antennen-Tuner und/oder Impedanzanpass-Schaltungen oder zumindest die Impedanzanpass-Netzwerke der Antennen-Tuner können in dem Bauelement integriert sein. Eine zusätzliche Erhöhung des Integrationsgrads und damit ein verkleinertes Bauelements kann erhalten werden, wenn zusätzlich Verstärkerelemente wie Sendeverstärker oder Empfangsverstärker im Bauelement integriert sind.

Das Modul kann dabei einen oder mehrere Substrate und ein Trägersubstrat mit einer oder mehreren dielektrischen Lagen und dazwischen angeordnete Metallisierungslagen umfassen. Insbesondere ist es möglich, dass Halbleitersubstrate in einem Mehrlagensubstrat integriert sind.

Es können insbesondere die folgenden Frequenzband-Paare zusammen verwendet werden:
LB und LB: 5 und 12, 5 und 17;
LB und MB: 3 und 5, 1 und 5, 3 und 20, 1 und 19, 3 und 8, 4 und 12, 4 und 17, 3 und 26, 3 und 19, 19 und 21;
MB und MB: 1 und 21, 2 und 4;
MB und HB: 1 und 7, 3 und 7, 4 und 7;
LB und HB: 7 und 20, 7 und 28, 5 und 7.

Je breitbandiger eine Antenne arbeiten kann, desto einfacher lässt sie sich in einem Mobilfunkgerät verwenden. Da die Bandbreite einer Antenne aber üblicherweise mit einer Verkleinerung der Antenne abnimmt, muss ein Kompromiss aus einer möglichst hohen Bandbreite und einer geringen Baugröße gefunden werden. Die Fähigkeit der oben angegebenen Filtertopologie bzw. Phasenschieber-Topologie, die vom Transceiver aus gesehene Antennen-Impedanz zu verändern, erlaubt es, einen Kompromiss zu umgehen: Selbst eine klein bauende und schmalbandig arbeitende Antenne kann durch entsprechende Impedanzkorrekturen, die durch das Filter selbst vorgenommen werden können, so betrieben werden, dass stets eine gute Signalübertragung möglich ist.

Es ist deshalb möglich, die HF-Schaltung mit einer Antenne zu verbinden, die eine Bandbreite von etwa 25 bis 30 MHz aufweist. Eine Antenne mit einer Bandbreite von 25 bis 30 MHz eignet sich z. B. als Antenne für einen zusätzlichen Empfangspfad.

Nachfolgend werden der prinzipielle Aufbau einer HF-Schaltung, die Grundzüge ihrer Arbeitsweise und typische, aber nicht einschränkende Ausführungsbeispiele anhand von schematischen Figuren näher erläutert.

Es zeigen:
- Fig. 1:: eine einfache Ausführungsbeispiel der HF-Schaltung mit einem Duplexer, einem dritten Filter und zwei Phasenschiebern,
- Fig. 2:: eine Ausführungsform der in Fig. 1 gezeigten Schaltung, bei der Filter und Phasenschieber abstimmbar sind,
- Fig. 3:: eine Ausführungsform der HF-Schaltung mit einem zweiten Duplexer,
- Fig. 4:: eine Ausführungsform der HF-Schaltung mit zwei Duplexern und zwei zusätzlichen Filtern,
- Fig. 5:: Eine Ausführungsform der HF-Schaltung mit einem Diplexer,
- Fig. 6:: eine Ausführung der HF-Schaltung mit zwei AntennenTunern,
- Fig. 7:: eine Ausführungsform der HF-Schaltung, bei der zwischen den Ports und den Filtern Verstärker vorgesehen sind,
- Fig. 8:: eine Ausführungsform der HF-Schaltung, bei der zwischen den Verstärkern und den Filtern Impedanzanpass-Schaltungen vorgesehen sind,
- Fig. 9:: eine Ausführungsform eines Bandpassfilters,
- Fig. 10:: eine Ausführungsform eines abstimmbaren Bandpassfilters,
- Fig. 11:: eine Serienverschaltung eines Bandpassfilters mit einem Phasenschieber,
- Fig. 12:: eine HF-Schaltung, die Carrier Aggregation beherrscht und einen einfachen Aufbau hat,
- Fig. 13:: ein Smith-Chart einer für sich allein betrachteten vorteilhaften Antenne,
- Fig. 14:: eine Ausführungsform eines HF-Filters, welche eine Antennenfehlanpassung korrigieren kann,
- Fig. 15:: frequenzabhängige Impedanzanpassung einer Antenne in verschiedenen Umgebungen,
- Fig. 16:: Einfügedämpfungen einer Referenzschaltung mit zwei Bandpassfiltern,
- Fig. 17:: Einfügedämpfungen einer HF-Schaltung mit Phasenschiebern verglichen mit der Referenzschaltung,
- Fig. 18:: Einfügedämpfungen einer HF-Schaltung, die an eine durch äußere Einwirkungen verstimmte Antenne angeschlossen ist,
- Fig. 19:: die Einfügedämpfungen einer Schaltung gemäß Fig. 18 bei variierten äußeren Einwirkungen,
- Fig. 20:: Einfügedämpfungen der Schaltung gemäß den Figuren 18 und 19 mit weiter variierten äußeren Einflüssen,
- Fig. 21:: Einfügedämpfungen einer HF-Schaltung mit zwei Bandpassfiltern und jeweils einem Phasenschieber,
- Fig. 22:: Einfügedämpfungen einer HF-Schaltung mit abstimmbaren Filtern und abstimmbaren Phasenschiebern, abgestimmt auf verschiedene Frequenzbänder bei gleichzeitiger Aktivität in verschiedenen Frequenzbändern.

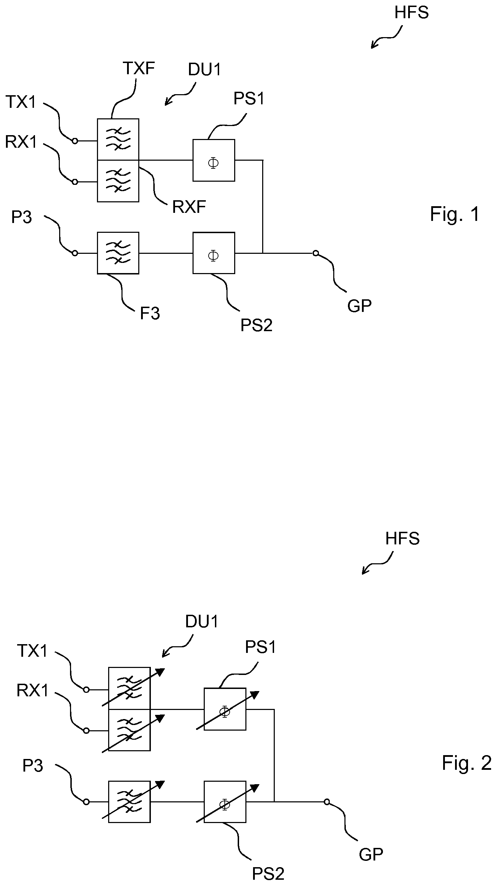

Fig. 1 zeigt eine Grundform der HF-Schaltung HFS. Die Schaltung umfasst einen ersten Duplexer DU1 und ein drittes Filter

F3. Sie umfasst ferner einen ersten Phasenschieber PS1 und einen zweiten Phasenschieber PS2. Der erste Duplexer ist zwischen einem ersten Sendeport TX1 und einem ersten Empfangsport RX1 einerseits und dem gemeinsamen Port GP andererseits verschaltet. Das dritte Filter F3 ist zwischen dem dritten Port P3 und dem gemeinsamen Port GP verschaltet. Der erste Phasenschieber PS1 ist zwischen dem ersten Duplexer DU1 und dem gemeinsamen Port GP verschaltet. Der zweite Phasenschieber PS2 ist zwischen dem dritten Filter F3 und dem gemeinsamen Port GP verschaltet.

Der erste Duplexer DU1 umfasst dabei ein Sendefilter TXF und ein Empfangsfilter RXF. Das Sendefilter TXF ist mit dem ersten Sendeport TX1 verschaltet. Das Empfangsfilter RXF ist mit dem ersten Empfangsport RX1 verschaltet.

Der Signalpfad verzweigt sich damit am gemeinsamen Port oder kurz nach dem gemeinsamen Port GP in zwei Teilsegmente, von denen eines den ersten Duplexer DU1 und das zweite das dritte Filter F3 umfasst. Ein Betrieb mit Carrier Aggregation ist auch bei problematischen Bandpaarkombinationen möglich, da die beiden Phasenschieber unerwünschte Signale, die z. B. aus dem ersten Sendeport TX1 zum dritten Filter F3 gelangen könnten, eliminiert oder reflektiert.

Figur 2 zeigt eine Ausführungsform der HF-Schaltung HFS, die in ihrer Topologie im Wesentlichen der Schaltung aus Figur 1 gleicht. Allerdings sind die Filter und die Phasenschieber abstimmbar (dargestellt durch den schrägen Pfeil) ausgeführt.

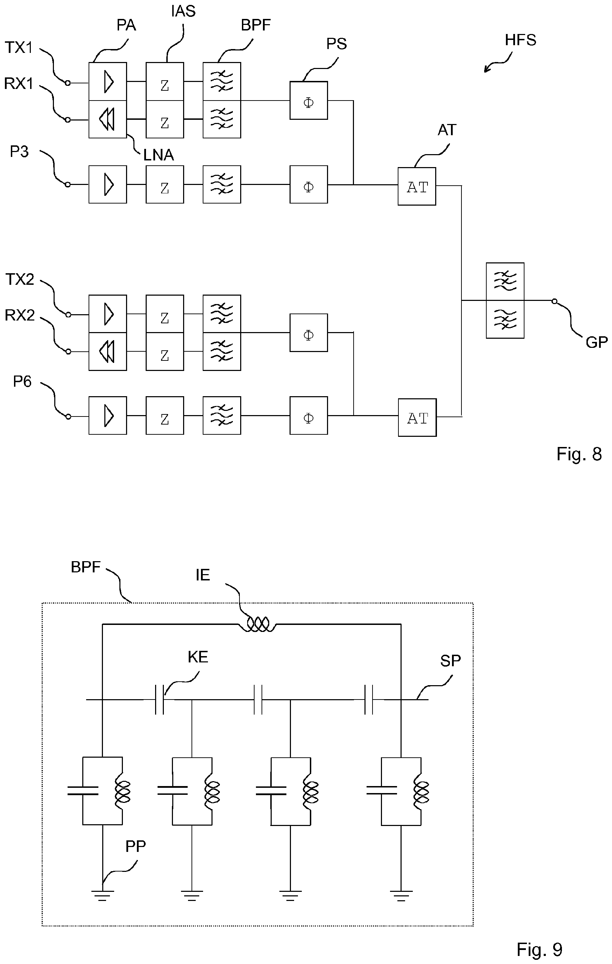

Es ist möglich, dass kein einziges Schaltungselement der HF-Schaltung abstimmbar ausgeführt ist. Es ist aber auch möglich, dass im Wesentlichen jeder funktionelle Block (Filter, Phasenschieber, ...) abstimmbar ausgeführt ist. Darüber hinaus ist es auch möglich, dass lediglich einzelne funktionelle Blöcke abstimmbar ausgeführt sind, während andere Blöcke (z. B. Impedanzanpass-Schaltungen, vgl. Fig. 8) Impedanzelemente konstanter Impedanz umfassen und deshalb nicht abstimmbar ausgeführt sind.

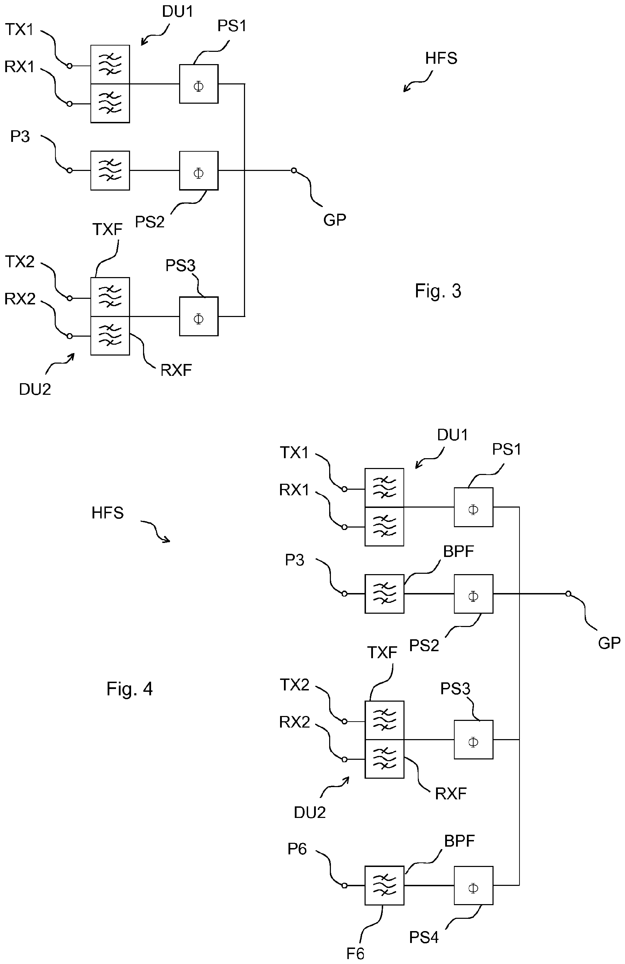

Figur 3 zeigt eine Ausführungsform der HF-Schaltung HFS, die einen zweiten Duplexer DU2, mit einem Sendefilter TXF und einem Empfangsfilter RXF, und einen dritten Phasenschieber PS3 umfasst. Das Sendefilter TXF des zweiten Duplexers ist dabei zwischen dem zweiten Sendeport TX2 und dem dritten Phasenschieber PS3 verschaltet. Das Empfangsfilter RXF des zweiten Duplexers DU2 ist zwischen dem zweiten Empfangsport RX2 und dem dritten Phasenschieber PS3 verschaltet. Der dritte Phasenschieber PS3 ist zwischen dem zweiten Duplexer und dem gemeinsamen Port GP verschaltet.

Der Signalweg, der vom dritten Port P3 über das dritte Filter und den zweiten Phasenschieber PS2 zum gemeinsamen Port GP führt, kann zum Carrier-Aggregation-Betrieb sowohl zusammen mit dem ersten Duplexer DU1 als auch mit dem zweiten Duplexer DU2 verwendet werden.

Figur 4 zeigt eine mögliche Ausführungsform der HF-Schaltung HFS, bei der im Vergleich zur in Figur 3 gezeigten Schaltung ein weiterer Signalpfadabschnitt hinzugefügt ist. Dieser führt vom sechsten Port P6 über ein als Bandpassfilter BPF ausgeführtes HF-Filter und einen vierten Phasenschieber PS4 zum gemeinsamen Port GP. Damit umfasst die HF-Schaltung somit zwei Duplexer und zwei zusätzliche Signalpfadabschnitte, von denen jeder zum Carrier-Aggregation-Betrieb mit einem der Duplexer verwendet werden kann.

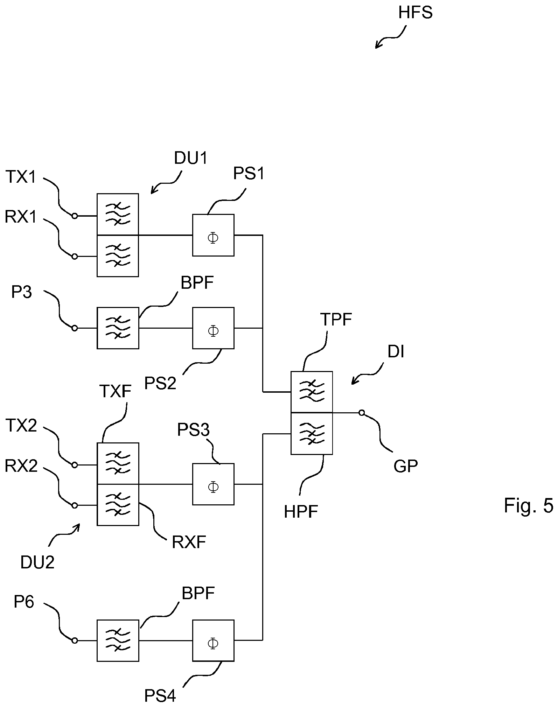

Figur 5 zeigt eine Ausführungsform der HF-Schaltung HFS, bei der zwei Signalpfadzweige über einen Diplexer DI am gemeinsamen Port GP verschaltet sind. Der erste Zweig umfasst die Signalpfadabschnitte mit dem ersten Duplexer DU1 und dem ersten Phasenschieber PS1 einerseits und mit dem zwischen dem dritten Port P3 und dem zweiten Phasenschieber PS2 angeordneten Bandpassfilter BPF und dem genannten zweiten Phasenschieber PS2 andererseits. Der zweite Ast umfasst einerseits den zweiten Duplexer DU2 und den zugehörigen dritten Phasenschieber PS3 einerseits und das mit dem sechstn Port verschaltete Bandpassfilter BPF und den vierten Phasenschieber PS4 andererseits.

Der Diplexer DI umfasst dabei ein Tiefpassfilter TPF und ein Hochpassfilter HPF. Über das Tiefpassfilter TPF können HF-Signale im LB und/oder im MB zwischen dem ersten Sendeport TX1, dem ersten Empfangsport RX1 und dem dritten Port P3 einerseits und dem gemeinsamen Port GP andererseits propagieren. Über das Hochpassfilter können Signale des MB und des HB über den zweiten Sendeport TX2, den zweiten Empfangsport RX2 und/oder den sechsten Port P6 einerseits und den gemeinsamen Port GP propagieren.

Der Diplexer stellt somit eine Frequenzweiche dar, die entsprechende Frequenzbereiche den zugehörigen Signalpfadabschnitten zuweist.

Die Existenz des Diplexers ist dabei nicht an die Existenz des zweiten Duplexers oder die Existenz des mit dem sechsten Port P6 verschalteten Bandpassfilters gebunden. Eine entsprechende HF-Schaltung HFS mit nur einem Duplexer, dem dritten Port P3 und dem sechsten Port P6 und einem Diplexer ist ebenso möglich wie eine Schaltung HFS mit zwei Duplexern und nur einem zusätzlichen Signalpfad, z. B. dem zwischen dem dritten Port P3 und dem gemeinsamen Port GP.

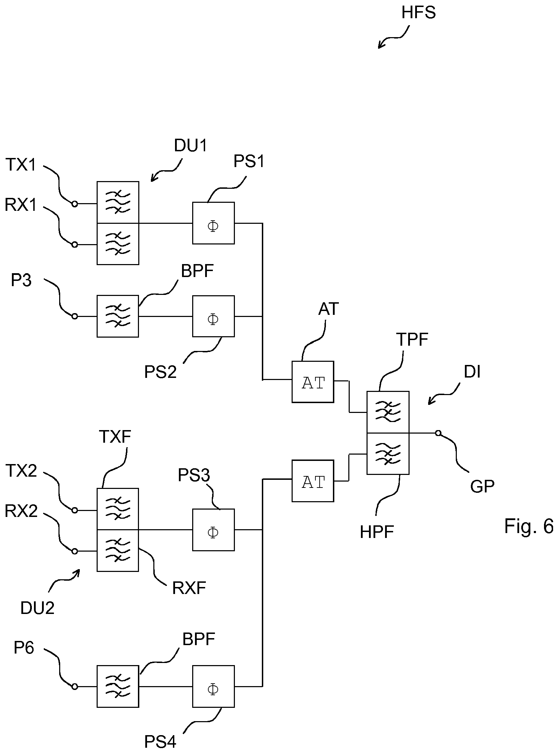

Figur 6 zeigt, wie ein möglicher Antennen-Tuner AT innerhalb der HF-Schaltung HFS verschaltet sein kann. Bevorzugt ist ein Antennen-Tuner zwischen den Phasenschiebern und einem der Filter des Diplexers DI verschaltet. Allerdings ist es auch möglich, einen einzigen Antennen-Tuner zwischen dem gemeinsamen Port GP und dem Diplexer DI zu verschalten. Dann benötigt nicht jeder Ast am entsprechenden Filter des Diplexers Di seinen eigenen Antennen-Tuner AT.

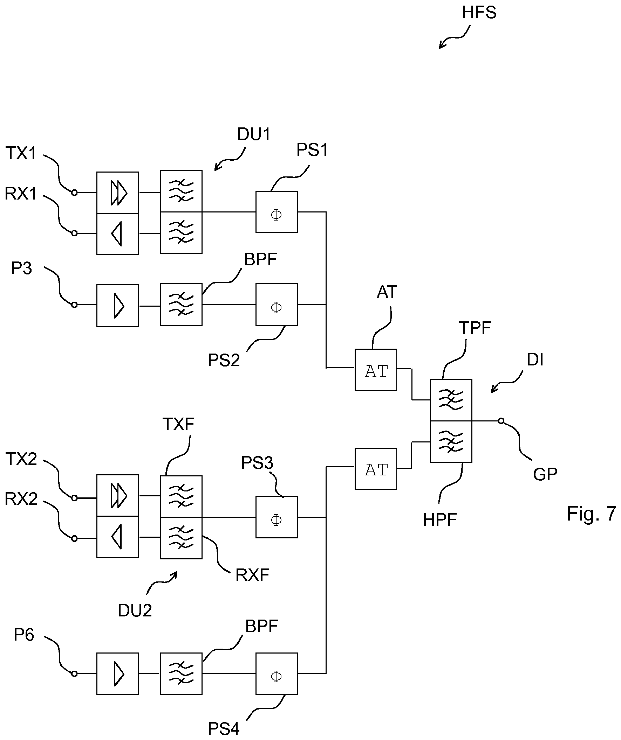

Figur 7 zeigt, wie zusätzliche Verstärker innerhalb der HF-Schaltung verschaltet sein können: Ein Empfangsfilter kann mit einem Empfangsverstärker, z. B. einem rauscharmen Verstärker, verschaltet sein. Ein Sendefilter kann mit einem Sendeverstärker, z. B. einem Leistungsverstärker, verschaltet sein.

Figur 8 zeigt, wie zwischen Verstärkern und Filtern jeweils eine Impedanzanpass-Schaltung IAS verschaltet sein kann, um eine Impedanzanpassung zwischen einer üblicherweise sehr niedrigen Ausgangsimpedanz eines Leistungsverstärkers oder einer üblicherweise sehr hohen Impedanz als Eingangsimpedanz eines Empfangsverstärkers einerseits und dem HF-Filter andererseits durchzuführen.

Figur 9 zeigt eine erfindungsgemäße Schaltungstopologie der Bandpassfilter BPF. So umfasst ein Bandpassfilter BPF einen Signalpfad SP, in dem beispielsweise drei kapazitive Elemente in Serie verschaltet sein können. Parallel zur Serienverschaltung der kapazitiven Elemente ist ein Impedanzelement IE vorgesehen. Die beiden Anschlüsse des Bandpassfilters BPF und zwei Knoten zwischen den drei kapazitiven Elementen sind jeweils über einen Parallelpfad PP mit Masse verschaltet. Ein Parallelpfad umfasst dabei eine Parallelschaltung eines kapazitiven Elements und eines induktiven Elements.

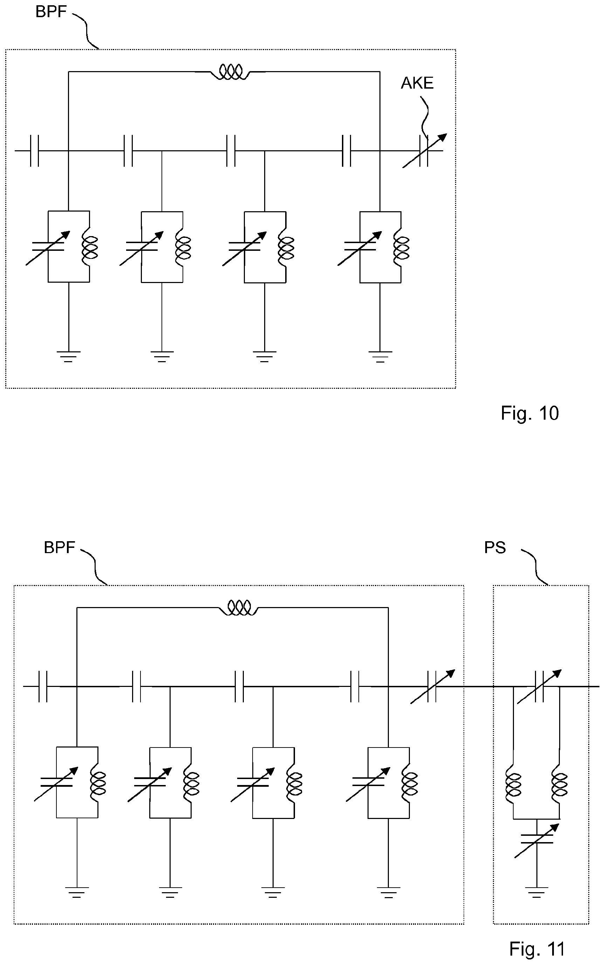

Figur 10 zeigt eine Ausführungsform des Bandpassfilters BPF, wobei eingangs- und ausgangsseitig jeweils ein weiteres kapazitives Element verschaltet ist. Das kapazitive Element im Signalpfad, welches an der mit dem gemeinsamen Port verschalteten Seite des Bandpassfilters angeordnet ist, ist dabei ein abstimmbares kapazitives Element AKE. Auch die kapazitiven Elemente in den Parallelschwingkreisen in den Parallelpfaden sind abstimmbar ausgeführt.

Das Bandpassfilter BPF ist damit insgesamt derart abstimmbar, dass seine charakteristischen Frequenzen, die Mittenfrequenz und die Bandbreite, für verschiedene im Mobilfunkbetrieb relevante Frequenzbänder eingestellt werden können.

Figur 11 zeigt erfindungsgemäß, wie ein Bandpassfilter BPF mit einem Phasenschieber PS verschaltet sein kann und welche Schaltungstopologie ein Phasenschieber PS aufweisen kann. So ist der Phasenschieber PS zwischen dem Bandpassfilter BPF und dem gemeinsamen Port GP verschaltet. Der Phasenschieber umfasst ein kapazitives Element im Signalpfad und zwei Parallelpfade gegen Masse. In jedem Parallelpfad gegen Masse ist ein induktives Element verschaltet. Masseseitig sind die beiden induktiven Elemente dann über ein weiteres kapazitives Element im Parallelpfad mit Masse verschaltet. Die beiden kapazitiven Elemente im Phasenschieber PS sind abstimmbar ausgeführt.

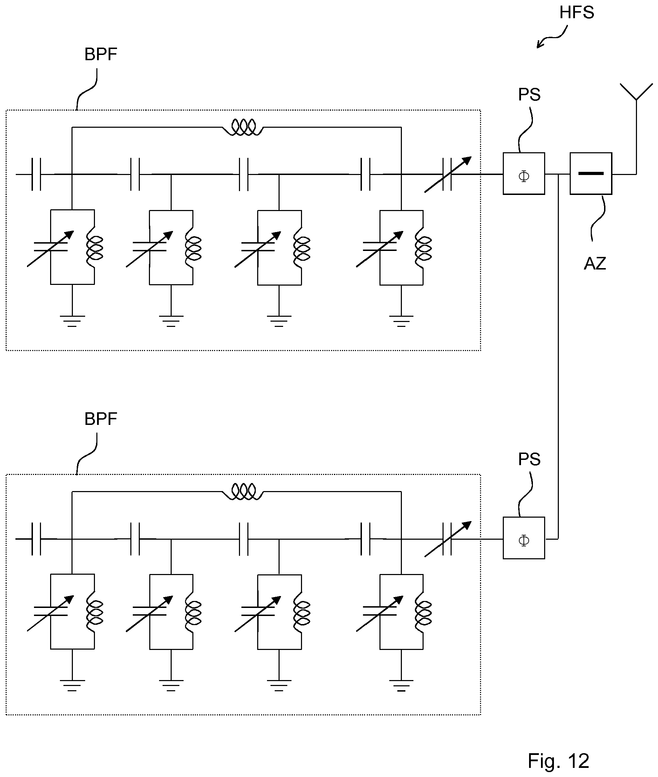

Figur 12 illustriert eine Schaltungstopologie mit zwei abstimmbaren Bandpassfiltern BPF und zwei Phasenschiebern PS, die über eine Antennenzuleitung A2 mit einer Antenne verschaltet sind. Eine derartige Verschaltung ermöglicht eine Carrier Aggregation auch bei Bandkombinationen, die mit derart einfachem Schaltungsaufwand mit üblichen Frontend-Schaltungen bisher nicht möglich waren.

Eines der beiden Bandpassfilter der Figur 12 kann ein Bandpassfilter des Duplexers sein. Das andere Bandpassfilter ist das dritte Bandpassfilter, der den dritten Port mit dem gemeinsamen Port, hier zwischen den Phasenschiebern und der Antennenzuleitung, verschaltet.

Dass die in den späteren Figuren gezeigten Simulationen, die auf der Topologie der Figur 11 basieren, gute Ergebnisse repräsentieren, zeigt, dass Schaltungstopologie selbst gut geeignet ist, problematische Carrier-Aggregation-Bandkombinationen leicht zu ermöglichen.

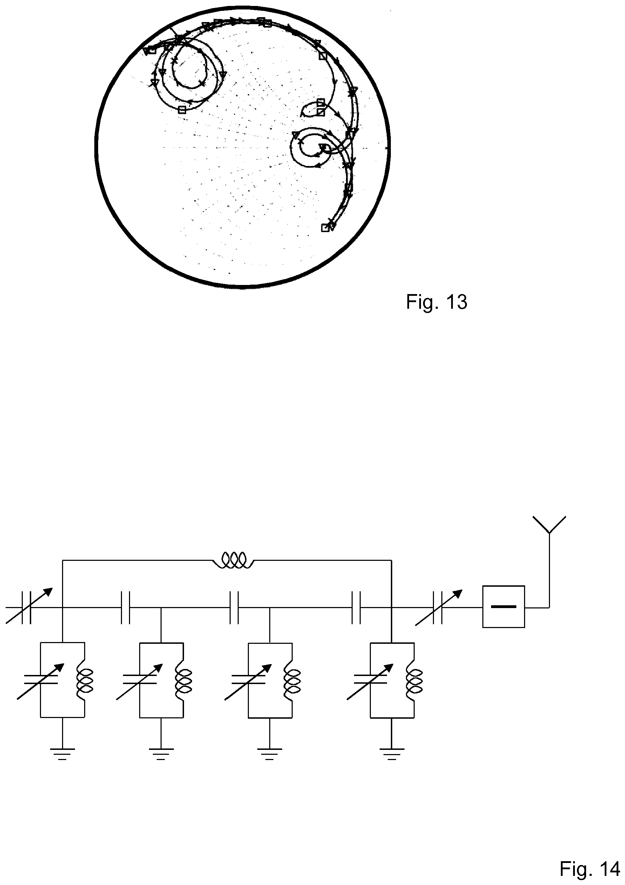

Figur 13 zeigt die frequenzabhängige Impedanz einer schmalbandigen Antenne mit einer charakteristischen Impedanz ungleich 50Ω, wie sie bei verschiedenen Umgebungsbedingungen von einer Frontend-Schaltung wahrgenommen wird. Im Wesentlichen verhält sich die Antenne dabei niedrigohmig und induktiv und stellt dabei einen geeigneten Gegenpart zur Frontend-Schaltung, als die die HF-Schaltung verwendet werden kann, dar.

Figur 14 zeigt eine Schaltungstopologie, die gut geeignet ist, um eine Antennenanpassung durchzuführen.

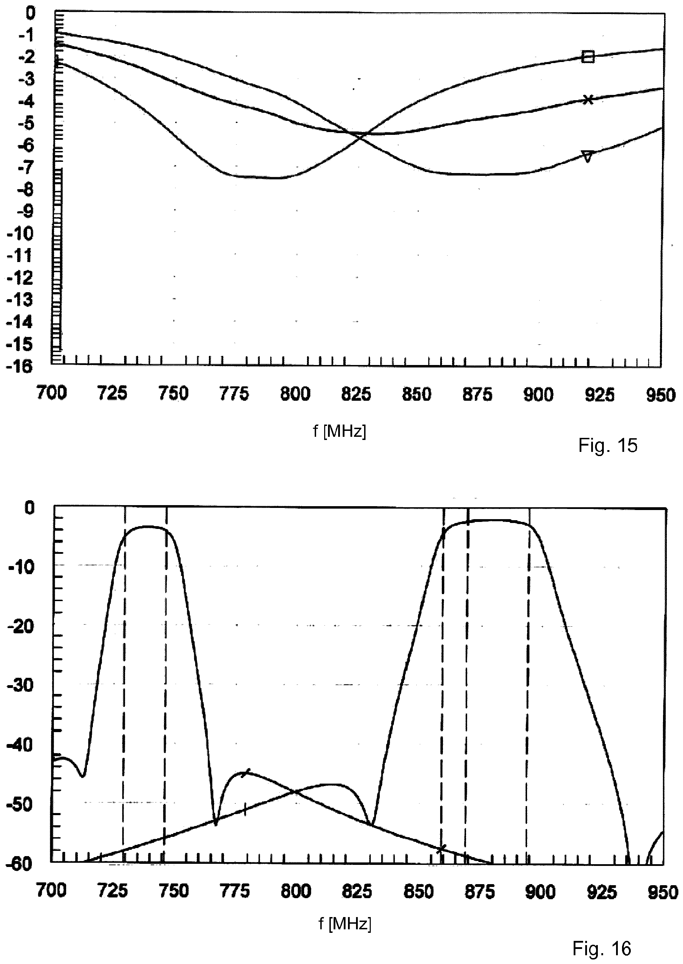

Figur 15 zeigt die Anpassung der zur Figur 13 gehörigen Antenne für die drei verschiedenen Umgebungsbedingungen. Es zeigt sich, dass die Arbeitsfrequenz der Antenne und ihr Reflexionsvermögen stark von der Anordnung von Gegenständen in ihrer Umgebung abhängen.

Figur 16 zeigt Einfügedämpfungen, die lediglich durch abstimmbare Filter ohne weitere funktionelle Blöcke erhalten werden und dienen deshalb als Referenz.

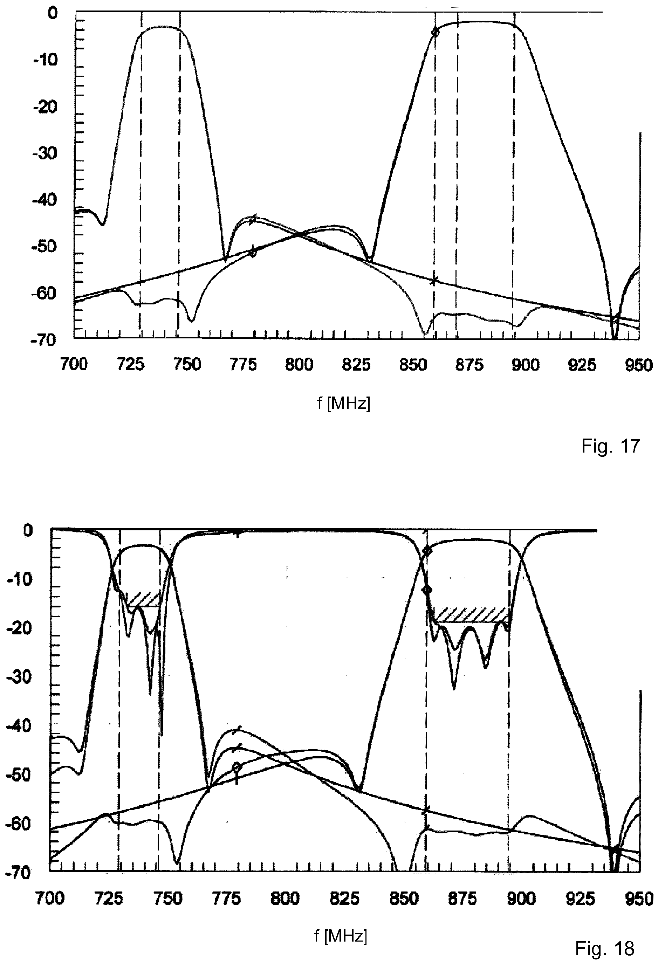

Figur 17 zeigt zusätzlich zu den Referenzkurven der Figur 16 die Einfügedämpfungen von HF-Schaltungen, bei denen die HF-Filter mit jeweils einem Phasenschieber verschaltet sind. Klar zu erkennen ist, dass der Phasenschieber die Durchlasscharakteristiken der Filter nicht wesentlich verschlechtert.

Figur 18 zeigt schließlich die Durchlasscharakteristik für eine vollwertig Frontend-Schaltung, die hier aus einem abstimmbaren Filter in Kombination mit einem abstimmbaren Phasenschieber, über den das Filter mit einer Antenne verschaltet ist, besteht. Die Antenne wird dabei in einer bestimmten, typischen räumlichen Umgebung simuliert.

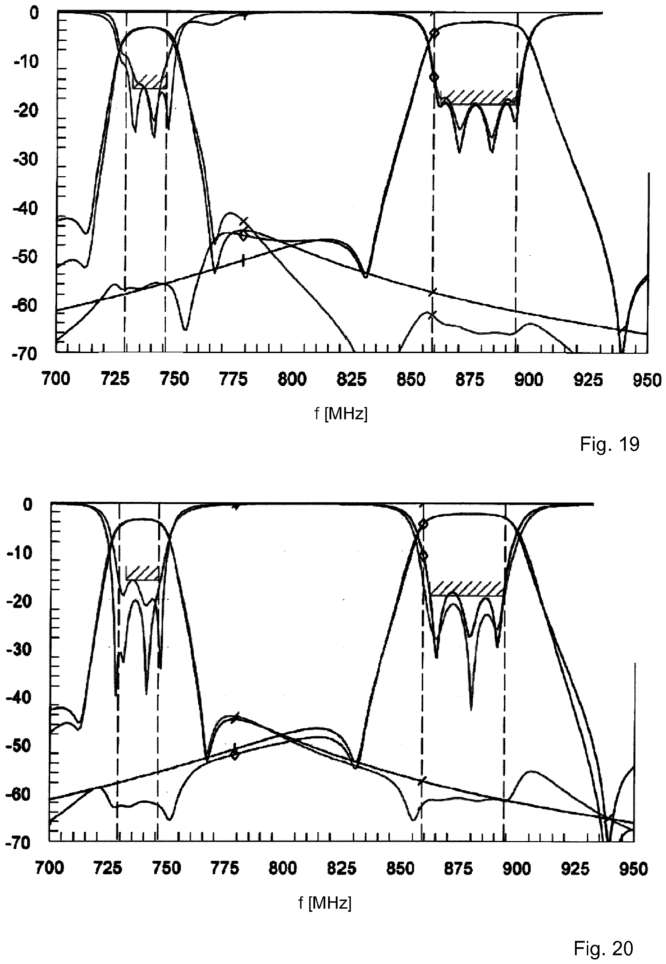

Ähnliches gilt für die Figur 19, deren Kurven auf einer zweiten, variierten räumlichen Umgebung der Antenne basieren.

Figur 20 zeigt wiederum Durchlasscharakteristiken der Schaltung, bei der die Antenne in einer dritten möglichen räumlichen Umgebung angeordnet ist.

Die Figuren 18, 19 und 20 zeigen, dass trotz unterschiedlicher äußerlicher Umgebung der Antenne jeweils eine gute Antennenanpassung ohne dedizierte Antennen-Tuner möglich ist.

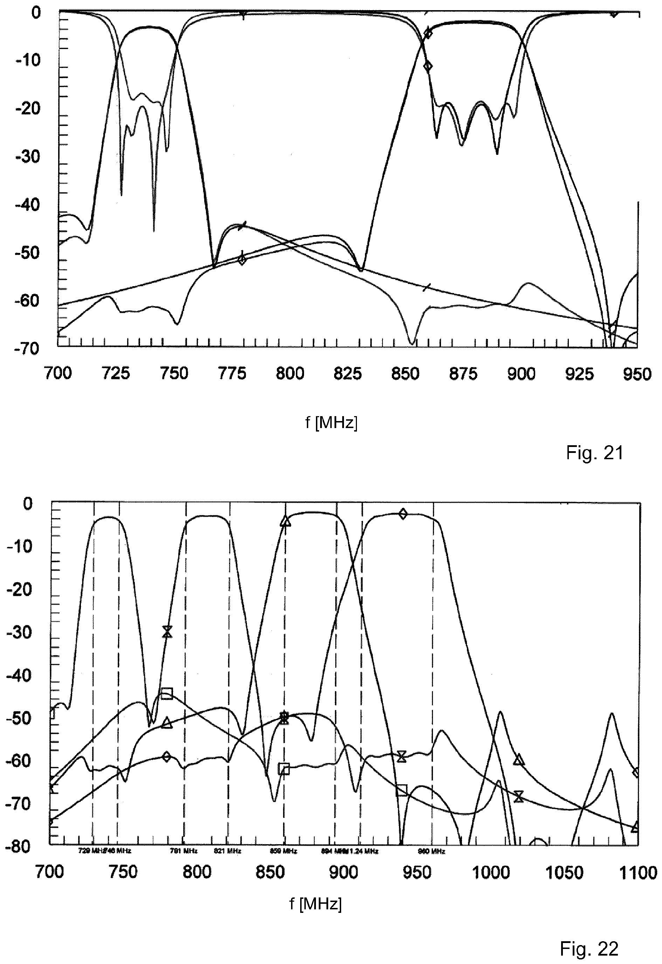

Figur 21 zeigt die Durchlasscharakteristik für die räumliche Umgebung, auf der auch die Durchlasscharakteristik der Figur 19 basiert. Die Charakteristiken der Figur 21 basieren dabei zusätzlich auf Phasenschiebern, wie sie beispielsweise in Figur 11 gezeigt sind.

Figur 22 zeigt, dass die Abstimmbarkeit bezüglich der Frequenzen der HF-Schaltung bei gleichzeitigem Betrieb in zwei verschiedenen Frequenzbändern (hier LB Band 5/26 und Band 8) 10 gut funktioniert.

### Bezugszeichenliste

- AKE:: abstimmbares kapazitives Element
- AT:: Antennen-Tuner
- AZ:: Antennenzuleitung
- BPF:: Bandpassfilter
- DI:: Diplexer
- DU1:: erster Duplexer
- DU2:: zweiter Duplexer
- F3:: drittes Filter
- F6:: sechstes Filter
- GP:: gemeinsamer Port
- HFS:: HF-Schaltung
- HPF:: Hochpassfilter des Diplexers
- IE:: induktives Element
- KE:: kapazitives Element
- LNA:: rauscharmer Verstärker, Empfangsverstärker
- P3:: dritter Port
- P6:: sechster Port
- PA:: Leistungsverstärker, Sendeverstärker
- PP:: Parallelpfad
- PS:: Phasenschieber
- PS1:: erster Phasenschieber
- PS2:: zweiter Phasenschieber
- PS3:: dritter Phasenschieber
- PS4:: vierter Phasenschieber
- RX1:: erster Empfangsport
- RX2:: zweiter Empfangsport
- RXF:: Empfangsfilter
- SP:: Signalpfad
- TPF:: Tiefpassfilter des Diplexers
- TX1:: erster Sendeport
- TX2:: zweiter Sendeport
- TXF:: Sendefilter

## Patentansprüche

1. HF-Schaltung (HFS), umfassend
- einen ersten Sendeport (TX1), einen ersten Empfangsport (RX1), einen gemeinsamen Port (GP) und einen dritten Port (P3),
- einen ersten Duplexer (DU1) mit einem Sendefilter (TXF), das zwischen dem ersten Sendeport (TX1) und dem gemeinsamen Port (GP) verschaltet ist, und einem Empfangsfilter (RXF), das zwischen dem ersten Empfangsport (RX1) und dem gemeinsamen Port (GP) verschaltet ist,
- ein drittes Filter (F3), das zwischen dem dritten Port (P3) und dem gemeinsamen Port (GP) verschaltet ist,
- einen ersten Phasenschieber (PS1), der zwischen dem ersten Duplexer (DU1) und dem gemeinsamen Port (GP) der HF-Schaltung (HFS) verschaltet ist,
- einen zweiten Phasenschieber (PS2), der zwischen dem dritten Filter (F3) und dem gemeinsamen Port (GP) der HF-Schaltung (HFS) verschaltet ist, wobei
- das dritte Filter (F3) ein Bandpassfilter ist,
- die HF-Schaltung (HFS) dazu vorgesehen ist, gleichzeitig Sendesignale über das Sendefilter (TXF) und das dritte Filter (F3) oder Empfangssignale über das Empfangsfilter (RXF) und das dritte Filter (F3) zu führen,
**dadurch gekennzeichnet, dass** zumindest ein Filter (TXF, RXF, F3) abstimmbar ist oder alle Filter (TXF, RXF, F3) abstimmbar sind, wobei zumindest ein Phasenschieber (PS, PS1, PS2) oder alle Phasenschieber (PS, PS1, PS2) jeweils
- ein serielles kapazitives Element,
- zwei Parallelpfade mit je einem induktiven Element und
- ein kapazitives Element, das die beiden Parallelpfade mit Masse verschaltet,
umfasst, und
wobei zumindest ein Filter (TXF, RXF, F3, F6) eine Filtertopologie mit
- einem parallelen induktiven Element (IE),
- drei seriellen kapazitiven Elementen (KE) und
- vier Parallelpfaden (PP) mit jeweils einer Parallelschaltung mit
einem kapazitiven Element und einem induktiven Element umfasst.

2. HF-Schaltung nach Anspruch 1, wobei zumindest ein Phasenschieber(PS1, PS2) oder alle Phasenschieber (PS1, PS2) abstimmbar sind.

3. HF-Schaltung nach einem der vorherigen Ansprüche, ferner umfassend einen zweiten Sendeport (TX2), einen zweiten Empfangsport (RX2) und einen zweiten Duplexer (DU2) mit einem Sendefilter (TXF), das zwischen dem zweiten Sendeport (TX2) und dem gemeinsamen Port (GP) verschaltet ist, und einem Empfangsfilter (RXF), das zwischen dem zweiten Empfangsport (RX2) und dem gemeinsamen Port (GP) verschaltet ist.

4. HF-Schaltung nach einem der vorherigen Ansprüche, ferner umfassend einen sechsten Port (P6) und ein als Bandpassfilter ausgestaltetes sechstes Filter (F6), das zwischen dem sechsten Port (P6) und dem gemeinsamen Port (GP) verschaltet ist.

5. HF-Schaltung nach einem der vorherigen Ansprüche, ferner umfassend
- einen Diplexer (DI) mit einem ersten Filter (TPF, HPF) und einem zweiten Filter (HPF, TPF), wobei
- das erste Filter (TPF, HPF) des Diplexers (DI) zwischen dem ersten Duplexer (DU1) und dem dritten Filter (F3) einerseits und dem gemeinsamen Port (GP) andererseits verschaltet ist,
- das zweite Filter (HPF, TPF) des Diplexers (DI) mit dem gemeinsamen Port (GP) verschaltet ist, und
- das erste Filter (TPF, HPF) und das zweite Filter (HPF, TPF) ausgewählt sind aus Hochpassfilter und Tiefpassfilter.

6. HF-Schaltung nach einem der vorherigen Ansprüche, ferner umfassend einen Antennentuner (AT), der zwischen dem ersten Duplexer (DU1) und dem gemeinsamen Port (GP) verschaltet ist.

7. HF-Schaltung nach einem der vorherigen Ansprüche, ferner umfassend eine erste Impedanzanpass-Schaltung (IAS), eine zweite Impedanzanpass-Schaltung (IAS) und eine dritte Impedanzanpass-Schaltung (IAS),
wobei
- die erste Impedanzanpass-Schaltung (IAS) zwischen dem ersten Sendeport (TX1) und dem Sendefilter (TXF) des ersten Duplexers (DU1) verschaltet ist.
- die zweite Impedanzanpass-Schaltung (IAS) zwischen dem ersten Empfangsport (RX1) und dem Empfangsfilter (RXF) des ersten Duplexers (DU1) verschaltet ist,
- die dritte Impedanzanpass-Schaltung (IAS) zwischen dem dritten Port (P3) und dem dritten Filter (F3) verschaltet ist.

8. HF-Schaltung nach Anspruch 7, wobei zumindest eine Impedanzanpass-Schaltung (IAS) oder alle Impedanzanpass-Schaltungen (IAS) abstimmbar sind.

9. HF-Schaltung nach einem der vorherigen Ansprüche, ferner umfassend
- einen Sendeverstärker (PA), einen Empfangsverstärker (LNA) und einen dritten Verstärker, wobei
- der Sendeverstärker (PA) zwischen dem ersten Sendeport (TX1) und dem gemeinsamen Port (GP) verschaltet ist,
- der Empfangsverstärker (LNA) zwischen dem ersten Empfangsport (RX1) und dem gemeinsamen Port (GP) verschaltet ist und
- der dritte Verstärker zwischen dem dritten Port (P3) und dem gemeinsamen Port (GP) verschaltet ist.

10. HF-Schaltung nach Anspruch 9, wobei zumindest ein Verstärker (PA, LNA) oder alle Verstärker (PA, LNA) abstimmbar sind.

11. HF-Schaltung nach Anspruch 1, wobei das Filter (TXF, RXF, F3, F6) vier oder fünf serielle kapazitive Elemente (KE) umfasst.

12. HF-Schaltung nach Anspruch 11, wobei das Filter (TXF, RXF, F3, F6) ein abstimmbares induktives Element (IE) oder ein abstimmbares kapazitives Element (KE) umfasst.

13. HF-Modul, das alle Schaltungselemente einer HF-Schaltung (HFS) nach einem der vorherigen Ansprüche in einem Bauelement zusammenfasst.

## Claims

1. HF circuit (HFS) comprising
- a first transmission port (TX1), a first reception port (RX1), a common port (GP), and a third port (P3),
- a first duplexer (DU1) with a transmission filter (TXF), which is connected between the first transmission port (TX1) and the common port (GP), and a reception filter (RXF), which is connected between the first reception port (RX1) and the common port (GP),
- a third filter (F3), which is connected between the third port (P3) and the common port (GP),
- a first phase shifter (PS1), which is connected between the first duplexer (DU1) and the common port (GP) of the HF circuit (HFS),
- a second phase shifter (PS2), which is connected between the third filter (F3) and the common port (GP) of the HF circuit (HFS), wherein
- the third filter (F3) is a bandpass filter,
- the HF circuit (HFS) is provided to simultaneously transmit transmission signals via the transmission filter (TXF) and the third filter (F3), or reception signals via the reception filter (RXF) and the third filter (F3),
**characterized in that** at least one filter (TXF, RXF, F3) can be tuned or all filters (TXF, RXF, F3) can be tuned,
wherein at least one phase shifter (PS, PS1, PS2) or all phase shifters (PS, PS1, PS2) each comprise
- a serial capacitive element,
- two parallel paths, each having an inductive element, and
- a capacitive element which connects the two parallel paths to ground, and
wherein at least one filter (TXF, RXF, F3, F6) comprises a filter topology with
- a parallel inductive element (IE),
- three serial capacitive elements (KE), and
- four parallel paths (PP), each with a parallel circuit with a capacitive element and an inductive element.

2. HF circuit according to claim 1, wherein at least one phase shifter (PS1, PS2) or all phase shifters (PS1, PS2) can be tuned.

3. HF circuit according to one of the preceding claims, further comprising a second transmission port (TX2), a second reception port (RX2), and a second duplexer (DU2) having a transmission filter (TXF) connected between the second transmission port (TX2) and the common port (GP), and a reception filter (RXF), which is connected between the second reception port (RX2) and the common port (GP).

4. HF circuit according to one of the preceding claims, further comprising a sixth port (P6) and a sixth filter (F6) configured as a bandpass filter connected between the sixth port (P6) and the common port (GP).

5. HF circuit according to one of the preceding claims, further comprising
- a diplexer (DI) having a first filter (TPF, HPF) and a second filter (HPF, TPF), wherein
- the first filter (TPF, HPF) of the diplexer (DI) is connected between the first duplexer (DU1) and, on the one hand, the third filter (F3) and, on the other, the common port (GP),
- the second filter (HPF, TPF) of the diplexer (DI) is connected to the common port (GP), and
- the first filter (TPF, HPF) and the second filter (HPF, TPF) are selected from high-pass filters and low-pass filters.

6. HF circuit according to one of the preceding claims, further comprising an antenna tuner (AT) connected between the first duplexer (DU1) and the common port (GP).

7. HF circuit according to one of the preceding claims, further comprising a first impedance matching circuit (IAS), a second impedance matching circuit (IAS), and a third impedance matching circuit (IAS),
wherein
- the first impedance matching circuit (IAS) is connected between the first transmission port (TX1) and the transmission filter (TXF) of the first duplexer (DU1),
- the second impedance matching circuit (IAS) is connected between the first reception port (RX1) and the reception filter (RXF) of the first duplexer (DU1),
- the third impedance matching circuit (IAS) is connected between the third port (P3) and the third filter (F3).

8. HF circuit according to claim 7, wherein at least one impedance matching circuit (IAS) or all impedance matching circuits (IAS) are tunable.

9. HF circuit according to one of the preceding claims, further comprising
- a transmission amplifier (PA), a reception amplifier (LNA), and a third amplifier, wherein
- the transmission amplifier (PA) is connected between the first transmission port (TX1) and the common port (GP),
- the reception amplifier (LNA) is connected between the first reception port (RX1) and the common port (GP), and
- the third amplifier is connected between the third port (P3) and the common port (GP).

10. HF circuit according to claim 9, wherein at least one amplifier (PA, LNA) or all amplifiers (PA, LNA) are tunable.

11. HF circuit according to claim 1, wherein the filter (TXF, RXF, F3, F6) comprises four or five serial capacitive elements (KE).

12. HF circuit according to claim 11, wherein the filter (TXF, RXF, F3, F6) comprises a tunable inductive element (IE) or a tunable capacitive element (KE).

13. HF module, which combines all the circuit elements of an HF circuit (HFS) according to one of the preceding claims in one component.

## Revendications

1. Circuit HF (HSF) incluant
- un premier port émetteur (TX*₁*), un premier port récepteur (RX₁), un port commun (GP) et un troisième port (P₃),
- un premier duplexeur (DU₁) avec un filtre d'émission (TXF), qui est inséré entre le premier port émetteur (TX₁) et le port commun (GP), et un filtre de réception (RXF) qui est inséré entre le premier port récepteur (RX₁) et le port commun (GP),
- un troisième filtre (F₃) qui est inséré entre le troisième port (P₃) et le port commun (GP),
- un premier déphaseur (PS₁) qui est inséré entre le premier duplexeur (DU₁) et le port commun (GP) du circuit HF (HFS),
- un deuxième déphaseur (PS₂) qui est inséré entre le troisième filtre (F₃) et le port commun (GP) du circuit HF (HFS),
- le troisième filtre (F₃) étant un filtre passe-bande,
- le circuit HF (HFS) étant prévu pour transporter simultanément des signaux d'émission à travers le filtre d'émission (TXF) et le troisième filtre (F₃) ou des signaux de réception à travers le filtre de réception (RXF) et le troisième filtre (F₃),
**caractérisé par** au moins un filtre (TXF, RXF, F₃) étant accordable ou tous les filtres (TXF, RXF, F₃) étant accordables,
au moins un déphaseur (PS, PS₁, PS₂) ou tous les déphaseurs (PS, PS₁, PS₂) incluent respectivement
- un élément capacitif série,
- deux chemins parallèles avec respectivement un élément inductif et
- un élément capacitif qui connecte les deux chemins parallèles à une masse, et
au moins un filtre (TXF, RXF, F₃, F₆) inclut une topologie de filtre avec
- un élément inductif parallèle (IE),
- trois éléments capacitifs série (KE) et
- quatre chemins parallèles (PP) avec respectivement un circuit parallèle avec un élément capacitif et un élément inductif.

2. Circuit HF selon la revendication 1, au moins un déphaseur (PS₁, PS₂) ou tous les déphaseurs (PS₁, PS₂) étant accordables.

3. Circuit HF selon une des revendications précédentes, incluant en outre un deuxième port émetteur (TX₂), un deuxième port récepteur (RX₂) et un deuxième duplexeur (DU₂) avec un filtre d'émission (TXF), qui est inséré entre le deuxième port émetteur (TX₂) et le port commun (GP), et un filtre de réception (RXF) qui est inséré entre le deuxième port récepteur (RX₂) et le port commun (GP).

4. Circuit HF selon une des revendications précédentes, incluant en outre un sixième port (P₆) et un sixième filtre (F₆) qui est inséré entre le sixième port (P₆) et le port commun (GP).

5. Circuit HF selon une des revendications précédentes, incluant en outre
- un diplexeur (DI) avec un premier filtre (TPF, HPF) et un deuxième filtre (HPF, TPF),
- le premier filtre (TPF, HPF) du diplexeur (DI) étant inséré entre le premier duplexeur (DU₁) et le troisième filtre (F₃) d'une part et le port commun (GP) d'autre part,
- le deuxième filtre (HPF, TPF) du diplexeur (DI) étant connecté au port commun (GP), et
- le premier filtre (TPF, HPF) et le deuxième filtre (HPF, TPF) étant choisis à partir d'un filtre passe-haut et d'un filtre passe-bas.

6. Circuit HF selon une des revendications précédentes, incluant en outre un tuner d'antenne (AT) qui est inséré entre le premier duplexeur (DU₁) et le port commun (GP) .

7. Circuit HF selon une des revendications précédentes, incluant en outre un premier circuit d'adaptation d'impédance (IAS), un deuxième circuit d'adaptation d'impédance (IAS) et un troisième circuit d'adaptation d'impédance (IAS),
- le premier circuit d'adaptation d'impédance (IAS) étant inséré entre le premier port émetteur (TX*₁*) et le filtre d'émission (TXF) du premier duplexeur (DU₁),
- le deuxième circuit d'adaptation d'impédance (IAS) étant inséré entre le premier port récepteur (RX₁) et le filtre de réception (RXF) du premier duplexeur (DU₁),
- le troisième circuit d'adaptation d'impédance (IAS) étant inséré entre le troisième port (P₃) et le troisième filtre (F₃).

8. Circuit HF selon la revendication 7, au moins un circuit d'adaptation d'impédance (IAS) ou tous les circuits d'adaptation d'impédance (IAS) étant accordables.

9. Circuit HF selon une des revendications précédentes, incluant en outre
- un amplificateur d'émission (PA), un amplificateur de réception (LNA) et un troisième amplificateur,
- l'amplificateur d'émission (PA) étant inséré entre le premier port émetteur (TX*₁*) et le port commun (GP),
- l'amplificateur de réception (LNA) étant inséré entre le premier port récepteur (RX₁) et le port commun (GP), et
- le troisième amplificateur étant inséré entre le troisième port (P₃) et le port commun (GP).

10. Circuit HF selon la revendication 9, au moins un amplificateur (PA, LNA) ou tous les amplificateurs (PA, LNA) étant accordables.

11. Circuit HF selon la revendication 1, le filtre (TXF, RXF, F₃, F₆) incluant quatre ou cinq éléments capacitifs série (KE).

12. Circuit HF selon la revendication 11, le filtre (TXF, RXF, F₃, F₆) incluant un élément inductif accordable (IE) ou un élément capacitif accordable (KE).

13. Module HF qui réunit dans un élément structurel tous les éléments de circuit d'un circuit HF (HFS) selon une des revendications précédentes.
